# EUROPEAN PATENT SPECIFICATION

(11) **EP 3 188 338 B1**
(45) Date of publication and mention of the grant of the patent: **31.07.2019**
(21) Application number: 16177178.7
(22) Date of filing: 30.06.2016
(51) Int. Cl.: H02J 3/40

(54) **GRID-CONNECTED CONTROL METHOD BASED ON VIRTUAL SYNCHRONIZER AND DEVICE THEREOF**
NETZGEKOPPELTES STEUERUNGSVERFAHREN AUF BASIS EINES VIRTUELLEN SYNCHRONISATORS UND VORRICHTUNG DAFÜR
PROCÉDÉ DE COMMANDE RACCORDÉ AU RÉSEAU SUR LA BASE D'UN SYNCHRONISEUR VIRTUEL ET DISPOSITIF ASSOCIÉ

(30) Priority: 30.12.2015 CN 201511029011
(43) Date of publication of application: 05.07.2017
(73) Proprietor: Sungrow Power Supply Co., Ltd., Hefei, Anhui 230088 (CN)
(72) Inventor: Jiang, Tao, Hefei, Anhui 230088 (CN); Yu, Yong, Hefei, Anhui 230088 (CN); Zhang, Kaihuan, Hefei, Anhui 230088 (CN)
(74) Representative: Witte, Weller & Partner Patentanwälte mbB

(56) References cited:
- EP-A2- 2 348 628
- CN-A- 102 723 741
- CN-A- 104 578 173
- CN-A- 104 638 643
- CN-A- 104 701 886
- CN-A- 104 901 322
- GB-A- 1 250 530
- GB-A- 1 312 726
- JP-A- 2009 273 206
- US-A1- 2005 135 031
- US-A1- 2009 108 678
- US-A1- 2011 216 562
- US-A1- 2013 293 023

## Description

### FIELD

The present disclosure relates to the field of inverter control technology, and particularly to a grid-connected control method based on a virtual synchronizer and a device thereof.

### BACKGROUND

Control on a virtual synchronizer has an advantage of droop control, and can realize droop adjustment control between a frequency and an active power and between a voltage and a reactive power. Also, the virtual synchronizer, which has an inertial component, can perform smooth adjustment on the frequency. An energy-storage inverter based on control of the virtual synchronizer has been widely adopted in an actual application.

Before the energy-storage inverter based on the control of the virtual synchronizer performs grid-connected operation, it is determined whether an alternating-current voltage outputted from the energy-storage inverter is synchronous with a voltage of an external grid. Only in a case of a positive determination, the energy-storage inverter can be connected to the grid with reduced impact to the grid in a grid-connected process.

Therefore, it is desired to provide a grid-connected control method for the energy-storage inverter, for successfully and smoothly connecting the energy-storage inverter to the grid without any impact to the grid.

### SUMMARY

In order to solve the technical problem in the conventional technology, a grid-connected control method based on a virtual synchronizer and a device thereof are defined in the appended claims.

A grid-connected control device based on a virtual synchronizer is further provided according to the appended claims.

Compared with the conventional technology, the present has at least following advantages.

The output voltage of the inverter is detected. It is considered that the voltage of the inverter is synchronous with the voltage of the grid only in a case that the first deviation between the output voltage of the inverter and the voltage of the grid falls within the first set voltage threshold; or else the output voltage of the inverter is adjusted by adjusting the set output voltage of the inverter. The output frequency of the inverter is detected. It is considered that the frequency of the inverter is synchronous with the frequency of the grid only in a case that the second deviation between the output frequency of the inverter and the frequency of the grid falls within the first set frequency threshold; or else the output frequency of the inverter is adjusted by adjusting the set output frequency of the inverter. Only in a case that the voltage and the frequency of the inverter are synchronous with the voltage and the frequency of the grid respectively, the inverter can be controlled to connect to the grid. In a case that either the voltage or the frequency of the inverter is asynchronous with the voltage or the frequency of the grid, impact is caused to the grid in a grid-connected process. In the grid-connected control method according to the embodiment, the inverter can be connected to the grid successfully without any impact to the grid. Further, after the grid is recovered and is connected to a micro gird for an energy-storage inverter, the grid-connected control method can ensure that a load power can be transferred to the external grid smoothly without any power impact to the external grid and the micro grid.

### BRIEF DESCRIPTION OF THE DRAWINGS

The drawings to be used in the description of the embodiments of the disclosure or the conventional technology will be described briefly as follows, so that the technical solutions according to the embodiments of the present disclosure or according to the conventional technology will become clearer. It is apparent that the drawings in the following description only illustrate some embodiments of the present application. For those skilled in the art, other drawings may be obtained according to these drawings without any creative work.
Figure 1 is a schematic diagram of an application scenario of an energy-storage inverter according to the present disclosure;
Figure 2 is a flow diagram of a first method embodiment of a grid-connected control method according to the present disclosure;
Figure 3 is a flow diagram of a second method embodiment of a grid-connected control method according to the present disclosure;
Figure 4 is a flow diagram of a third method embodiment of a grid-connected control method according to the present disclosure;
Figure 5 is a schematic diagram of a first device embodiment of a grid-connected control device according to the present disclosure;
Figure 6 is a schematic diagram of a second device embodiment of a grid-connected control device according to the present disclosure; and
Figure 7 is a schematic diagram of a third device embodiment of a grid-connected control device according to the present disclosure.

### DETAILED DESCRIPTION OF THE EMBODIMENTS

In order to make the skilled in the art understand the technical solution of the present disclosure better, the technical solution according to the embodiments of the present disclosure are described clearly and completely below in conjunction with the drawings in the embodiments of the present disclosure. It is apparent that the described embodiments are only a part rather than all of the embodiments.

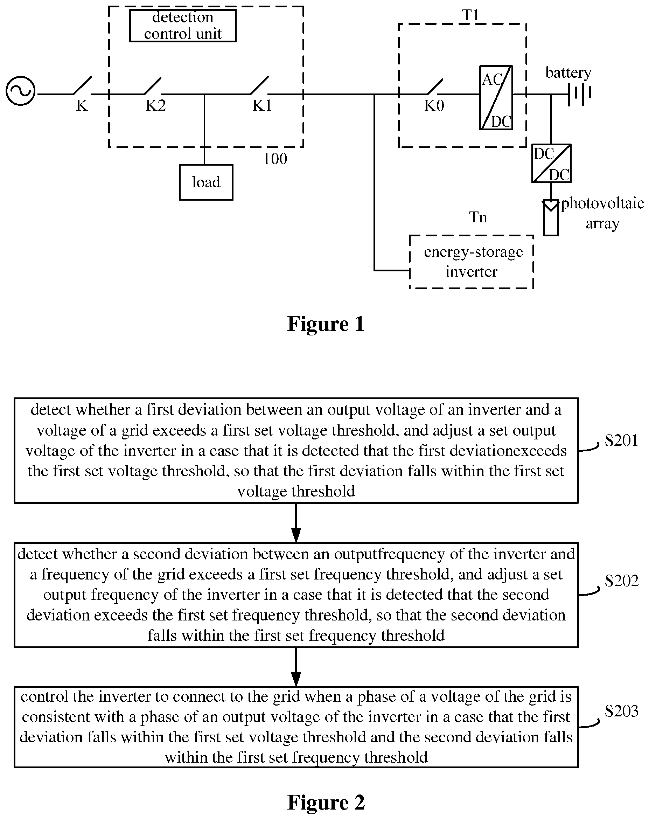

An application scenario of an energy-storage inverter is introduced first, so that the technology according to the present disclosure is understood better by those skilled in the art. Reference is made to Figure 1, which is a schematic diagram of an application scenario of the energy-storage inverter according to the present disclosure.

It is to be noted that, an inverter in the present disclosure refers to the energy-storage inverter, and is abbreviated as an inverter hereinafter. It can be understood that, there may be one energy-storage inverter, or multiple energy-storage inverters connected together. As shown in Figure 1, there are two energy-storage inverters T1 and Tn. All the energy-storage inverters have a same structure.

K is an access switch for an external grid.

K1 is a synchronous switch at a micro-grid side in an intelligent coordination control cabinet.

K2 is a synchronous switch at an external-grid side in the intelligent coordination control cabinet.

K0 is an alternating-current output contactor of the energy-storage inverter.

A detection control unit in the intelligent coordination control cabinet 100 is configured to communicate with each of the energy-storage inverters, and perform synchronous logic determination in a connection process of the external grid to the micro grid, and control K2 to be turned on after the external grid becomes synchronous with the micro grid.

The inverter is configured to perform synchronous logic determination in a connection process of the micro grid to the external grid, and turn on the alternating-current output contactor thereof after the external grid becomes synchronous with the micro grid.

A direct-current side of the inverter is connected with a battery. The battery is charged by a photovoltaic array via DC-DC. The photovoltaic array also provides a direct current for the direct-current side of the inverter.

It can be understood that, DC-DC is a way of charging, by the energy-storage inverter, an accumulator when the accumulator is lack of electricity, which is not limited thereto.

The grid-connected control method according to the present disclosure is applied to synchronize a voltage and a frequency of the energy-storage inverter with a voltage and a frequency of the grid, for successfully connecting the energy-storage inverter to the grid.

### First Method Embodiment

Reference is made to Figure 2, which is a flow diagram of a first method embodiment of a grid-connected control method according to the present disclosure.

It can be understood that, since that synchronous between the energy-storage inverter and the grid not only includes voltage synchronization but also includes frequency synchronization, determination is made in terms of both a voltage and a frequency. The voltage represents an amplitude of the voltage, and the frequency represents a phase of the voltage. That is, the inverter can be connected to the grid only in a case that an amplitude and a phase of the voltage of the inverter are synchronous with an amplitude and a phase of a voltage of the grid respectively. In the present disclosure, the energy-storage inverter, which has a characteristic of droop control of the virtual synchronizer, can realize droop control between a frequency and an active power and between a voltage and an inactive power.

The grid-connected control method based on a virtual synchronizer according to the embodiment includes steps S201 to S203.

In step S201, it is detected whether a first deviation between an output voltage of an inverter and a voltage of a grid exceeds a first set voltage threshold, and a set output voltage of the inverter is adjusted in a case that it is detected that the first deviation exceeds the first set voltage threshold, so that the first deviation falls within the first set voltage threshold.

It can be understood that, the first set voltage threshold is set as required, which is not defined in the present disclosure. In a case that the first deviation between the output voltage of the inverter and the voltage of the grid falls within the first set voltage threshold, it is considered that the first deviation falls within an allowable range, that is, the voltage of the inverter is synchronous with the voltage of the grid.

In step S202, it is detected whether a second deviation between an output frequency of the inverter and a frequency of the grid exceeds a first set frequency threshold, and a set output frequency of the inverter is adjusted in a case that it is detected that the second deviation exceeds the first set frequency threshold, so that the second deviation falls within the first set frequency threshold.

It can be understood that, the first set frequency threshold is set as required, which is not defined in the present disclosure. In a case that the second deviation between the output frequency of the inverter and the frequency of the grid falls within the first set frequency threshold, it is considered that the second deviation falls within an allowable range, that is, the frequency of the inverter is synchronous with the frequency of the grid.

In step S203, the inverter is controlled to connect to the grid when a phase of a voltage of the grid is consistent with a phase of an output voltage of the inverter in a case that the first deviation falls within the first set voltage threshold and the second deviation falls within the first set frequency threshold.

It can be understood that, the phase of the voltage of the grid being consistent with the phase of the output voltage of the inverter refers to that a phase difference between the phase of the voltage of the grid and the phase of the output voltage of the inverter falls within a preset phase range.

Only in a case that the voltage and the frequency of the inverter are synchronous with the voltage and the frequency of the grid respectively, the inverter can be controlled to connect to the grid.

In the grid-connected control method according to the present disclosure, the output voltage of the inverter is detected. It is considered that the voltage of the inverter is synchronous with the voltage of the grid only in a case that the first deviation between the output voltage of the inverter and the voltage of the grid falls within the first set voltage threshold; or else the output voltage of the inverter is adjusted by adjusting the set output voltage of the inverter. The output frequency of the inverter is detected. It is considered that the frequency of the inverter is synchronous with the frequency of the grid only in a case that the second deviation between the output frequency of the inverter and the frequency of the grid falls within the first set frequency threshold; or else the output frequency of the inverter is adjusted by adjusting the set output frequency of the inverter. Only in a case that the voltage and the frequency of the inverter are synchronous with the voltage and the frequency of the grid respectively, the inverter can be controlled to connect to the grid. In a case that either the voltage or the frequency of the inverter is asynchronous with the voltage or the frequency of the grid, impact is caused to the grid in a grid-connected process. In the grid-connected control method according to the embodiment, the inverter can be connected to the grid successfully without any impact to the grid. Further, after the grid is recovered and is connected to a micro gird for an energy-storage inverter, the grid-connected control method can ensure that a load power can be transferred to the external grid smoothly without any power impact to the external grid and the micro grid.

### Second Method Embodiment

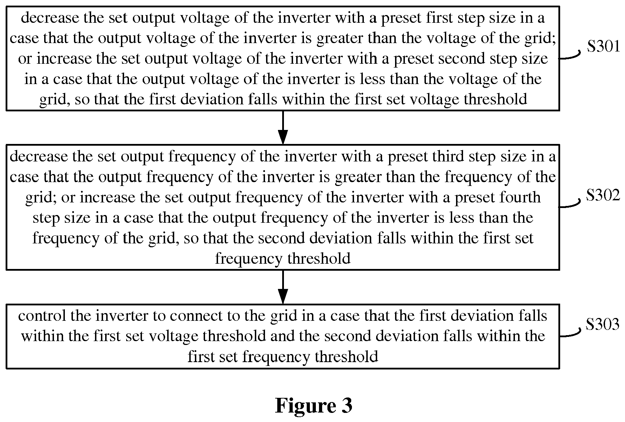

Reference is made to Figure 3, which is a flow diagram of a second method embodiment of a grid-connected control method according to the present disclosure.

The grid-connected control method based on a virtual synchronizer according to the embodiment includes steps S301 to S303.

Specifically, the adjusting the set output voltage of the inverter in a case that it is detected that the first deviation exceeds the first set voltage threshold includes step S301.

In step S301, the set output voltage of the inverter is decreased with a preset first step size in a case that the output voltage of the inverter is greater than the voltage of the grid, or the set output voltage of the inverter is increased with a preset second step size in a case that the output voltage of the inverter is less than the voltage of the grid, so that the first deviation falls within the first set voltage threshold.

It can be understood that, the first deviation may be an absolute value of a difference between the output voltage of the inverter and the voltage of the grid. When the first deviation exceeds the first set voltage threshold, it means that the output voltage of the inverter is greater than the voltage of the grid, or the output voltage of the inverter is less than the voltage of the grid.

It is to be noted that the first step size may or may not be equal to the second step size.

The adjusting the set output frequency of the inverter in a case that it is detected that the second deviation exceeds the first set frequency threshold includes step S302.

In step S302, the set output frequency of the inverter is decreased with a preset third step size in a case that the output frequency of the inverter is greater than the frequency of the grid, or the set output frequency of the inverter is increased with a preset fourth step size in a case that the output frequency of the inverter is less than the frequency of the grid, so that the second deviation falls within the first set frequency threshold.

It can be understood that, the second deviation may be an absolute value of a difference between the output frequency of the inverter and the frequency of the grid. When the second deviation exceeds the first set frequency threshold, it means that the output frequency of the inverter is greater than the frequency of the grid, or the output frequency of the inverter is less than the frequency of the grid.

It is to be noted that the third step size may or may not be equal to the fourth step size.

In step S303, the inverter is controlled to connect to the grid when a phase of a voltage of the grid is consistent with a phase of an output voltage of the inverter in a case that the first deviation falls within the first set voltage threshold and the second deviation falls within the first set frequency threshold.

In the embodiment, in a case that the first deviation exceeds the first set voltage threshold, the output voltage of the inverter is synchronized with the voltage of the grid by adjusting the set output voltage of the inverter; and in a case that the second deviation exceeds the first set frequency threshold, the output frequency of the inverter is synchronized with a frequency of the grid by adjusting the set output frequency of the inverter, to prepare the inverter to successfully connect to the grid.

It can be understood that, the control process in the first method embodiment and the control process in the second method embodiment are performed before the inverter is connected to the grid, and the set output voltage and the set output frequency of the inverter are recovered after the inverter is connected to the grid successfully, which is described in detail below in conjunction with a third method embodiment.

### Third Method Embodiment

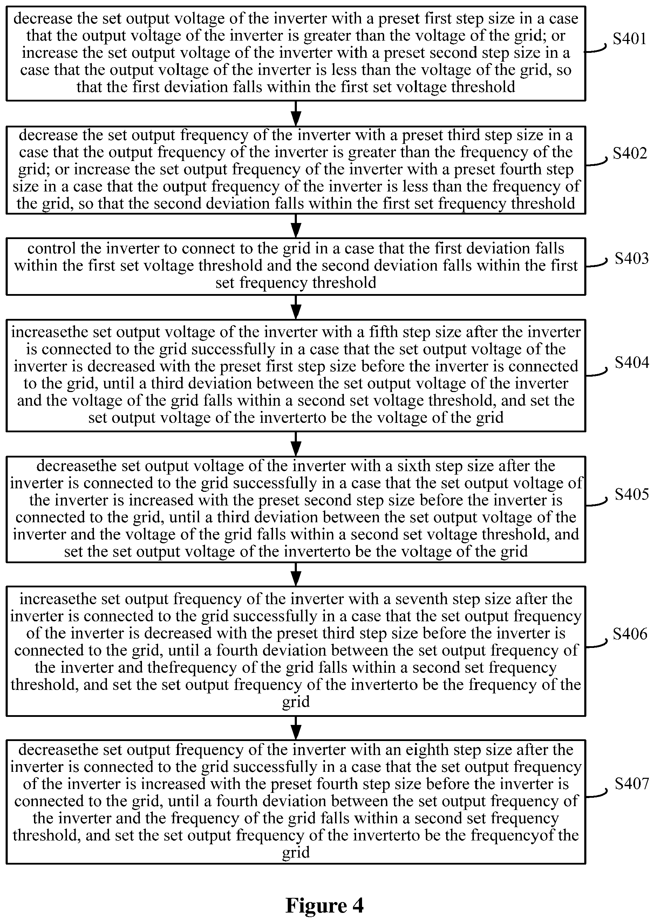

Reference is made to Figure 4, which is a flow diagram of a third method embodiment of a grid-connected control method according to the present disclosure.

In the embodiment, steps S401 to S403 are the same as steps S301 to S303, respectively, which are not described here.

After the inverter is connected to the grid successfully, the grid-connected control method further includes following steps S404 to S407.

In step S404, the set output voltage of the inverter is increased with a fifth step size after the inverter is connected to the grid successfully in a case that the set output voltage of the inverter is decreased with the preset first step size before the inverter is connected to the grid, until a third deviation between the set output voltage of the inverter and the voltage of the grid falls within a second set voltage threshold; and the set output voltage of the inverter is set to be the voltage of the grid.

A load reactive power born by the inverter will be transferred to the external grid gradually in a process of gradually increasing the set output voltage of the inverter.

It is to be noted that the first step size may or may not be equal to the fifth step size.

In step S405, the set output voltage of the inverter is decreased with a sixth step size after the inverter is connected to the grid successfully in a case that the set output voltage of the inverter is increased with the preset second step size before the inverter is connected to the grid, until a third deviation between the set output voltage of the inverter and the voltage of the grid falls within a second set voltage threshold; and the set output voltage of the inverter is set to be the voltage of the grid.

The load reactive power born by the inverter will be transferred to the external grid gradually in a process of gradually decreasing the set output voltage of the inverter.

It is to be noted that the second step size may or may not be equal to the sixth step size

It is to be noted that there is no sequential order between the steps S404 and S405.

It can be understood that, a reactive power outputted from the inverter will reach a set value in a case that the set output voltage of the inverter is set to be the voltage of the grid.

In step S406, the set output frequency of the inverter is increased with a seventh step size after the inverter is connected to the grid successfully in a case that the set output frequency of the inverter is decreased with the preset third step size before the inverter is connected to the grid, until a fourth deviation between the set output frequency of the inverter and the frequency of the grid falls within a second set frequency threshold; and the set output frequency of the inverter is set to be the frequency of the grid.

A load active power born by the inverter is transferred to the external grid gradually in a process of gradually increasing the set output frequency of the inverter.

It is to be noted that the third step size may or may not be equal to the seventh step size.

In step S407, the set output frequency of the inverter is decreased with an eighth step size after the inverter is connected to the grid successfully in a case that the set output frequency of the inverter is increased with the preset fourth step size before the inverter is connected to the grid, until a fourth deviation between the set output frequency of the inverter and the frequency of the grid falls within a second set frequency threshold; and the set output frequency of the inverter is set to be the frequency of the grid.

The load active power born by the inverter is transferred to the external grid gradually in a process of gradually decreasing the set output frequency of the inverter.

It is to be noted that the fourth step size may or may not be equal to the eighth step size.

It is to be noted that there is no sequential order between steps S406 and S407.

It can be understood that, after being recovered, the set output voltage and the set output frequency of the inverter will not be changed again until the inverter is started for a next time.

In the grid-connected control method according to the embodiment, the set output voltage and the set output frequency of the inverter may be recovered automatically after the inverter is connected to the grid successfully. It can be understood that, an object of recovering the set output voltage and the set output frequency of the inverter is smoothly transferring a load power born by the inverter to the external grid, so that the inverter charges the battery as possible. Or else, the battery will continue to be lack of electricity.

With the grid-connected control method embodiments according to the present disclosure described above, smooth grid-connected control can be ensured effectively in any parameter setting range, and it is effectively avoided a complicated process of resetting an operating parameter by the inverter every time before the inverter performs grid-connected operation. Also, the grid-connected control method does not affect regulating performance of the energy-storage inverter in performing the off-grid operation. Parameter regulating such as power scheduling can be performed normally in the off-grid process, and the inverter can be connected to the grid successfully through the grid-connected voltage and frequency adjustment process as required.

Based on the grid-connected control method based on the virtual synchronizer according to the above embodiments, the embodiment of the present disclosure further provides a grid-connected control device based on a virtual synchronizer, which is described in detail below in conjunction with drawings.

### First Device Embodiment

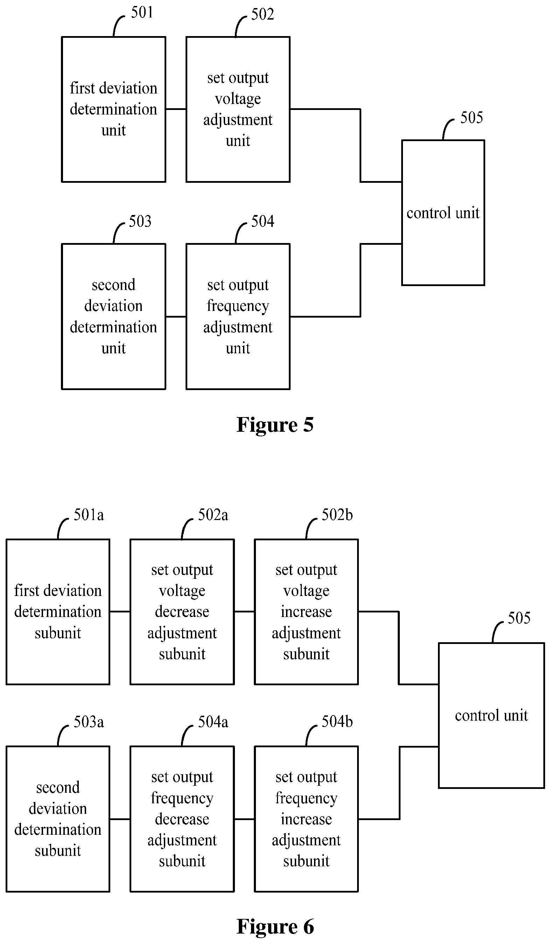

Reference is made to Figure 5, which is a schematic diagram of a first device embodiment of a grid-connected control device according to the present disclosure.

It can be understood that, since that synchronous between the energy-storage inverter and the grid not only includes voltage synchronization but also includes frequency synchronization, determination is made in terms of both a voltage and a frequency. The voltage represents an amplitude of the voltage, and the frequency represents a phase of the voltage. That is, the inverter can be connected to the grid only in a case that an amplitude and a phase of the voltage of the inverter are synchronous with an amplitude and a phase of a voltage of the grid respectively. In the present disclosure, the energy-storage inverter, which has a characteristic of droop control of the virtual synchronizer, can realize droop control between a frequency and an active power and between a voltage and an inactive power.

The grid-connected control device based on the virtual synchronizer according to the embodiment includes a first deviation determination unit 501, a set output voltage adjustment unit 502, a second deviation determination unit 503, a set output frequency adjustment unit 504 and a control unit 505.

The first deviation determination unit 501 is configured to detect whether a first deviation between an output voltage of an inverter and a voltage of a grid exceeds a first set voltage threshold.

It can be understood that, the first set voltage threshold is set as required, which is not defined in the present disclosure. In a case that the first deviation between the output voltage of the inverter and the voltage of the grid falls within the first set voltage threshold, it is considered that the first deviation falls within an allowable range, that is, the voltage of the inverter is synchronous with the voltage of the grid.

The set output voltage adjustment unit 502 is configured to adjust a set output voltage of the inverter in a case that it is detected that the first deviation exceeds the first set voltage threshold, so that the first deviation falls within the first set voltage threshold.

The second deviation determination unit 503 is configured to detect whether the second deviation between the output frequency of the inverter and the frequency of the grid exceeds the first set frequency threshold.

It can be understood that, a first set frequency threshold is set as required, which is not defined in the present disclosure. In a case that the second deviation between the output frequency of the inverter and the frequency of the grid falls within the first set frequency threshold, it is considered that the second deviation falls within an allowable range, that is, the frequency of the inverter is synchronous with the frequency of the grid.

The set output frequency adjustment unit 504 is configured to adjust a set output frequency of the inverter is adjusted in a case that it is detected that the second deviation exceeds the first set frequency threshold, so that the second deviation falls within the first set frequency threshold.

The control unit 505 is configured to control the inverter to connect to the grid when a phase of a voltage of the grid is consistent with a phase of an output voltage of the inverter in a case that the first deviation falls within the first set voltage threshold and the second deviation falls within the first set frequency threshold.

It can be understood that, the phase of the voltage of the grid being consistent with the phase of the output voltage of the inverter refers to that a phase difference between the phase of the voltage of the grid and the phase of the output voltage of the inverter falls within a preset phase range.

Only in a case that the voltage and the frequency of the inverter are synchronous with the voltage and the frequency of the grid respectively, the inverter can be controlled to connect to the grid.

In the grid-connected control device according to the present disclosure, the output voltage of the inverter is detected. It is considered that the voltage of the inverter is synchronous with the voltage of the grid only in a case that the first deviation between the output voltage of the inverter and the voltage of the grid falls within the first set voltage threshold; or else the output voltage of the inverter is adjusted by adjusting the set output voltage of the inverter. The output frequency of the inverter is detected. It is considered that the frequency of the inverter is synchronous with the frequency of the grid only in a case that the second deviation between the output frequency of the inverter and the frequency of the grid falls within the first set frequency threshold; or else the output frequency of the inverter is adjusted by adjusting the set output frequency of the inverter. Only in a case that the voltage and the frequency of the inverter are synchronous with the voltage and the frequency of the grid respectively, the inverter can be controlled to connect to the grid when it is determined that the phase difference between the phase of the voltage of the grid and the phase of the output voltage of the inverter meets the requirement. In a case that either the voltage or the frequency of the inverter is asynchronous with the voltage or the frequency of the grid, impact is caused to the grid in a grid-connected process. In the grid-connected control device according to the embodiment, the inverter can be connected to the grid successfully without any impact to the grid. Further, after the grid is recovered and is connected to a micro gird for an energy-storage inverter, the grid-connected control device can ensure that a load power can be transferred to the external grid smoothly without any power impact to the external grid and the micro grid.

### Second Device Embodiment

Reference is made to Figure 6, which is a schematic diagram of a second device embodiment of a grid-connected control device according to the present disclosure.

The first deviation determination unit 501 includes a first deviation determination subunit 501a. The set output voltage adjustment unit 502 includes a set output voltage decrease adjustment subunit 502a and a set output voltage increase adjustment subunit 502b.

The first deviation determination subunit 501a is configured to determine whether the output voltage of the inverter is greater than the voltage of the grid in a case that the first deviation between the output voltage of the inverter and the voltage of the grid exceeds the first set voltage threshold.

The set output voltage decrease adjustment subunit 502a is configured to decrease the set output voltage of the inverter with a preset first step size in a case that the output voltage of the inverter is greater than the voltage of the grid.

The set output voltage increase adjustment subunit 502b is configured to increase the set output voltage of the inverter with a preset second step size in a case that the output voltage of the inverter is less than the voltage of the grid.

It can be understood that, the first deviation may be an absolute value of a difference between the output voltage of the inverter and the voltage of the grid. When the first deviation exceeds the first set voltage threshold, it means that the output voltage of the inverter is greater than the voltage of the grid, or the output voltage of the inverter is less than the voltage of the grid.

It is to be noted that the first step size may or may not be equal to the second step size.

The second deviation determination unit 503 includes a second deviation determination subunit 503a. The set output frequency adjustment unit 504 includes a set output frequency decrease adjustment subunit 504a and a set output frequency increase adjustment subunit 504b.

The second deviation determination subunit 503a is configured to determine whether the output frequency of the inverter is greater than the frequency of the grid in a case that the second deviation between the output frequency of the inverter and the frequency of the grid exceeds the first set frequency threshold.

The set output frequency decrease adjustment subunit 504a is configured to decrease the set output frequency of the inverter with a preset third step size in a case that the output frequency of the inverter is greater than the frequency of the grid.

The set output frequency increase adjustment subunit 504b is configured to increase the set output frequency of the inverter with a preset fourth step size in a case that the output frequency of the inverter is less than the frequency of the grid.

It can be understood that, the second deviation may be an absolute value of a difference between the output frequency of the inverter and the frequency of the grid. When the second deviation exceeds the first set frequency threshold, it means that the output frequency of the inverter is greater than the frequency of the grid, or the output frequency of the inverter is less than the frequency of the grid.

It is to be noted that the third step size may or may not be equal to the fourth step size.

In the embodiment, in a case that the first deviation exceeds the first set voltage threshold, an output voltage of the inverter is synchronized with a voltage of the grid by adjusting the set output voltage of the inverter; and in a case that the second deviation exceeds the first set frequency threshold, the output frequency of the inverter is synchronized with a frequency of the grid by adjusting the set output frequency of the inverter, to prepare the inverter to successfully connect to the grid.

### Third Device Embodiment

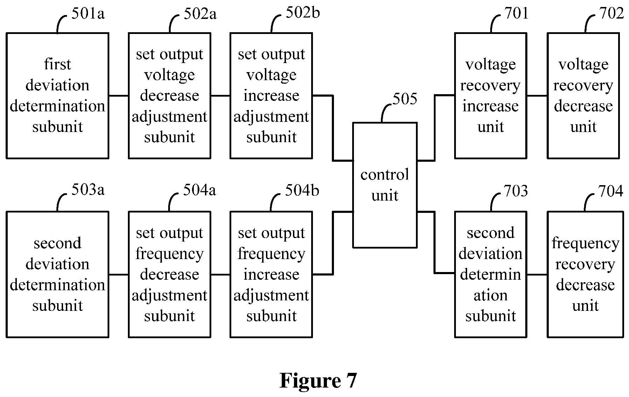

Reference is made to Figure 7, which is a schematic diagram of a third device embodiment of a grid-connected control device according to the present disclosure.

The grid-connected control device according to the embodiment further includes a voltage recovery increase unit 701 and a voltage recovery decrease unit 702.

The voltage recovery increase unit 701 is configured to increase the set output voltage of the inverter with a fifth step size after the inverter is connected to the grid successfully in a case that the set output voltage of the inverter is decreased with the preset first step size before the inverter is connected to the grid, until a third deviation between the set output voltage of the inverter and the voltage of the grid falls within a second set voltage threshold, and set the set output voltage of the inverter to be the voltage of the grid.

A load reactive power born by the inverter will be transferred to the external grid gradually in a process of gradually increasing the set output voltage of the inverter.

It is to be noted that the first step size may or may not be equal to the fifth step size.

The voltage recovery decrease unit 702 is configured to decrease the set output voltage of the inverter with a sixth step size after the inverter is connected to the grid successfully in a case that the set output voltage of the inverter is increased with the preset second step size before the inverter is connected to the grid, until a third deviation between the set output voltage of the inverter and the voltage of the grid falls within a second set voltage threshold, and set the set output voltage of the inverter to be the voltage of the grid.

The load reactive power born by the inverter will be transferred to the external grid gradually in a process of gradually decreasing the set output voltage of the inverter.

It is to be noted that the second step size may or may not be equal to the sixth step size.

The grid-connected control device according to the embodiment further includes a frequency recovery increase unit 703 and a frequency recovery decrease unit 704.

The frequency recovery increase unit 703 is configured to increase the set output frequency of the inverter with a seventh step size after the inverter is connected to the grid successfully in a case that the set output frequency of the inverter is decreased with the preset third step size before the inverter is connected to the grid, until a fourth deviation between the set output frequency of the inverter and the frequency of the grid falls within a second set frequency threshold, and set the set output frequency of the inverter to be the frequency of the grid.

A load active power born by the inverter is transferred to the external grid gradually in a process of gradually increasing the set output frequency of the inverter.

It is to be noted that the third step size may or may not be equal to the seventh step size.

The frequency recovery decrease unit 704 is configured to decrease the set output frequency of the inverter with an eighth step size after the inverter is connected to the grid successfully in a case that the set output frequency of the inverter is increased with the preset fourth step size before the inverter is connected to the grid, until a fourth deviation between the set output frequency of the inverter and the frequency of the grid falls within a second set frequency threshold, and set the set output frequency of the inverter to be the frequency of the grid.

The load active power born by the inverter is transferred to the external grid gradually in a process of gradually decreasing the set output frequency of the inverter.

It is to be noted that the fourth step size may or may not be equal to the eighth step size.

It can be understood that, after being recovered, the set output voltage and the set output frequency of the inverter will not be changed again until the inverter is started for a next time.

In the grid-connected control device according to the embodiment, the set output voltage and the set output frequency of the inverter may be recovered automatically after the inverter is connected to the grid successfully. It can be understood that, an object of recovering the set output voltage and the set output frequency of the inverter is smoothly transferring a load power born by the inverter to the external grid, so that the inverter charges the battery as possible. Or else, the battery will continue to be lack of electricity.

With the grid-connected control device embodiments according to the present disclosure described above, smooth grid-connected control can be ensured effectively in any parameter setting range, and it is effectively avoided a complicated process of resetting an operating parameter by the inverter every time before the inverter performs grid-connected operation. Also, the grid-connected control device does not affect regulating performance of the energy-storage inverter in performing the off-grid operation. Parameter regulating such as power scheduling can be performed normally in the off-grid process, and the inverter can be connected to the grid successfully through the grid-connected voltage and frequency adjustment process as required.

## Claims

1. A grid-connected control method based on a virtual synchronizer, wherein the grid-connected control method comprises:
detecting (S201) whether a first deviation between an output voltage of an energy-storage inverter and a voltage of a grid exceeds a first set voltage threshold, and adjusting (S201) a set output voltage of the energy-storage inverter in a case that it is detected that the first deviation exceeds the first set voltage threshold, so that the first deviation falls within the first set voltage threshold;
detecting (S202) whether a second deviation between an output frequency of the energy-storage inverter and a frequency of the grid exceeds a first set frequency threshold, and adjusting (S202) a set output frequency of the energy-storage inverter in a case that it is detected that the second deviation exceeds the first set frequency threshold, so that the second deviation falls within the first set frequency threshold; and
controlling (S203) the energy-storage inverter to connect to the grid when a phase of a voltage of the grid is consistent with a phase of an output voltage of the energy-storage inverter in a case that the first deviation falls within the first set voltage threshold and the second deviation falls within the first set frequency threshold,
wherein the adjusting (S201) the set output voltage of the energy-storage inverter in a case that it is detected that the first deviation exceeds the first set voltage threshold comprises:
decreasing (S301, S401) the set output voltage of the energy-storage inverter with a preset first step size in a case that the output voltage of the energy-storage inverter is greater than the voltage of the grid; or
increasing (S301, S401) the set output voltage of the energy-storage inverter with a preset second step size in a case that the output voltage of the energy-storage inverter is less than the voltage of the grid, and **characterized in that** after the energy-storage inverter is connected to the grid successfully, the grid-connected control method further comprises the following steps to transfer load reactive power born by the energy-storage inverter to the grid gradually:
increasing (S404) the set output voltage of the energy-storage inverter with a fifth step size after the energy-storage inverter is connected to the grid successfully in a case that the set output voltage of the energy-storage inverter is decreased with the preset first step size before the energy-storage inverter is connected to the grid, until a third deviation between the set output voltage of the energy-storage inverter and the voltage of the grid falls within a second set voltage threshold, and setting the set output voltage of the energy-storage inverter to be the voltage of the grid; or
decreasing (S405) the set output voltage of the energy-storage inverter with a sixth step size after the energy-storage inverter is connected to the grid successfully in a case that the set output voltage of the energy-storage inverter is increased with the preset second step size before the energy-storage inverter is connected to the grid, until a third deviation between the set output voltage of the energy-storage inverter and the voltage of the grid falls within a second set voltage threshold, and setting the set output voltage of the energy-storage inverter to be the voltage of the grid.

2. The grid-connected control method based on the virtual synchronizer according to claim 1, wherein the adjusting (S202) the set output frequency of the energy-storage inverter in a case that it is detected that the second deviation exceeds the first set frequency threshold comprises:
decreasing (S302, S402) the set output frequency of the energy-storage inverter with a preset third step size in a case that the output frequency of the energy-storage inverter is greater than the frequency of the grid; or
increasing (S302, S402) the set output frequency of the energy-storage inverter with a preset fourth step size in a case that the output frequency of the energy-storage inverter is less than the frequency of the grid.

3. The grid-connected control method based on the virtual synchronizer according to claim 1 or 2, wherein after the energy-storage inverter is connected to the grid successfully, the grid-connected control method further comprises:
increasing (S406) the set output frequency of the energy-storage inverter with a seventh step size after the energy-storage inverter is connected to the grid successfully in a case that the set output frequency of the energy-storage inverter is decreased with the preset third step size before the energy-storage inverter is connected to the grid, until a fourth deviation between the set output frequency of the energy-storage inverter and the frequency of the grid falls within a second set frequency threshold, and setting the set output frequency of the energy-storage inverter to be the frequency of the grid; or
decreasing (S407) the set output frequency of the energy-storage inverter with an eighth step size after the energy-storage inverter is connected to the grid successfully in a case that the set output frequency of the energy-storage inverter is increased with the preset fourth step size before the energy-storage inverter is connected to the grid, until a fourth deviation between the set output frequency of the energy-storage inverter and the frequency of the grid falls within a second set frequency threshold, and setting the set output frequency of the energy-storage inverter to be the frequency of the grid.

4. A grid-connected control device based on a virtual synchronizer, wherein the grid-connected control device comprises:
a first deviation determination unit (501) configured to detect whether a first deviation between an output voltage of an energy-storage inverter and a voltage of a grid exceeds a first set voltage threshold;
a set output voltage adjustment unit (502) configured to adjust a set output voltage of the energy-storage inverter in a case that the first deviation exceeds the first set voltage threshold, so that the first deviation falls within the first set voltage threshold;
a second deviation determination unit (503) configured to determine whether a second deviation between an output frequency of the energy-storage inverter and a frequency of a grid exceeds a first set frequency threshold;
a set output frequency adjustment unit (504) configured to adjust a set output frequency of the energy-storage inverter in a case that the second deviation exceeds the first set frequency threshold, so that the second deviation falls within the first set frequency threshold; and
a control unit (505) configured to control the energy-storage inverter to connect to the grid when a phase of a voltage of the grid is consistent with a phase of an output voltage of the energy-storage inverter in a case that the first deviation falls within the first set voltage threshold and the second deviation falls within the first set frequency threshold, wherein
the first deviation determination unit (501) comprises:
a first deviation determination subunit (501a) configured to determine whether the output voltage of the energy-storage inverter is greater than the voltage of the grid in a case that the first deviation between the output voltage of the energy-storage inverter and the voltage of the grid exceeds the first set voltage threshold; and
the set output voltage adjustment unit (502) comprises:
a set output voltage decrease adjustment subunit (502a) configured to decrease the set output voltage of the energy-storage inverter with a preset first step size in a case that the output voltage of the energy-storage inverter is greater than the voltage of the grid, and
a set output voltage increase adjustment subunit (502b) configured to increase the set output voltage of the energy-storage inverter with a preset second step size in a case that the output voltage of the energy-storage inverter is less than the voltage of the grid, and **characterized in that**
the grid-connected control device further comprises:
a voltage recovery increase unit (701) configured to increase the set output voltage of the energy-storage inverter with a fifth step size to transfer load reactive power born by the energy-storage inverter to the grid gradually after the energy-storage inverter is connected to the grid successfully in a case that the set output voltage of the energy-storage inverter is decreased with the preset first step size before the energy-storage inverter is connected to the grid, until a third deviation between the set output voltage of the energy-storage inverter and the voltage of the grid falls within a second set voltage threshold, and set the set output voltage of the energy-storage inverter to be the voltage of the grid; and
a voltage recovery decrease unit (702) configured to decrease the set output voltage of the energy-storage inverter with a sixth step size after the energy-storage inverter is connected to the grid successfully in a case that the set output voltage of the energy-storage inverter is increased with the preset second step size before the energy-storage inverter is connected to the grid, until a third deviation between the set output voltage of the energy-storage inverter and the voltage of the grid falls within a second set voltage threshold, and set the set output voltage of the energy-storage inverter to be the voltage of the grid.

5. The grid-connected control device according to claim 4, wherein
the second deviation determination unit (503) comprises:
a second deviation determination subunit (503a) configured to determine whether the output frequency of the energy-storage inverter is greater than the frequency of the grid in a case that the second deviation between the output frequency of the energy-storage inverter and the frequency of the grid exceeds the first set frequency threshold; and
the set output frequency adjustment unit (504) comprises:
the set output frequency decrease adjustment subunit (504a) configured to decrease the set output frequency of the energy-storage inverter with a preset third step size in a case that the output frequency of the energy-storage inverter is greater than the frequency of the grid; and
the set output frequency increase adjustment subunit (504b) configured to increase the set output frequency of the energy-storage inverter with a preset fourth step size in a case that the output frequency of the energy-storage inverter is less than the frequency of the grid.

6. The grid-connected control device according to claim 4, further comprising:
a frequency recovery increase unit (703) configured to increase the set output frequency of the energy-storage inverter with a seventh step size after the energy-storage inverter is connected to the grid successfully in a case that the set output frequency of the energy-storage inverter is decreased with the preset third step size before the energy-storage inverter is connected to the grid, until a fourth deviation between the set output frequency of the energy-storage inverter and the frequency of the grid falls within a second set frequency threshold, and set the set output frequency of the energy-storage inverter to be the frequency of the grid; and
a frequency recovery decrease unit (704) configured to decrease the set output frequency of the energy-storage inverter with an eighth step size after the energy-storage inverter is connected to the grid successfully in a case that the set output frequency of the energy-storage inverter is increased with the preset fourth step size before the energy-storage inverter is connected to the grid, until a fourth deviation between the set output frequency of the energy-storage inverter and the frequency of the grid falls within a second set frequency threshold, and set the set output frequency of the energy-storage inverter to be the frequency of the grid.

## Patentansprüche

1. Netzverbundenes Steuerverfahren basierend auf einem virtuellen Synchronisierer, wobei das netzverbundene Steuerverfahren aufweist:
Bestimmen (S201), ob eine erste Abweichung zwischen einer Ausgangsspannung eines Energiespeicher-Inverters und einer Spannung eines Netzes einen ersten eingestellten Spannungsschwellenwert überschreitet, und Einstellen (S201) einer eingestellten Ausgangsspannung des Energiespeicher-Inverters in einem Fall, in dem erkannt wird, dass die erste Abweichung den ersten eingestellten Spannungsschwellenwert überschreitet, so dass die erste Abweichung innerhalb des ersten eingestellten Spannungsschwellenwerts liegt;
Bestimmen (S202), ob eine zweite Abweichung zwischen einer Ausgangsfrequenz des Energiespeicher-Inverters und einer Frequenz des Netzes einen ersten eingestellten Frequenzschwellenwert überschreitet, und Einstellen (S202) einer eingestellten Ausgangsfrequenz des Energiespeicher-Inverters in einem Fall, in dem erkannt wird, dass die zweite Abweichung den ersten eingestellten Frequenzschwellenwert überschreitet, so dass die zweite Abweichung innerhalb des ersten eingestellten Frequenzschwellenwerts liegt; und
Steuern (S203) des Energiespeicher-Inverters zum Anschließen an das Netz, wenn eine Phase einer Spannung des Netzes mit einer Phase einer Ausgangsspannung des Energiespeicher-Inverters übereinstimmt, in einem Fall, dass die erste Abweichung innerhalb des ersten eingestellten Spannungsschwellenwerts liegt und die zweite Abweichung innerhalb des ersten eingestellten Frequenzschwellenwerts liegt,
wobei das Einstellen (S201) der eingestellten Ausgangsspannung des Energiespeicher-Inverters in einem Fall, in dem bestimmt wird, dass die erste Abweichung den ersten eingestellten Spannungsschwellenwerts überschreitet, aufweist:
Verringern (S301, S401) der eingestellten Ausgangsspannung des Energiespeicher-Inverters mit einer voreingestellten ersten Schrittweite, in einem Fall, dass die Ausgangsspannung des Energiespeicher-Inverters größer die Spannung des Netzes zu sein ist; oder
Erhöhen (S301, S401) der eingestellten Ausgangsspannung des Energiespeicher-Inverters mit einer voreingestellten zweiten Schrittweite, in einem Fall, dass die Ausgangsspannung des Energiespeicher-Inverters kleiner die Spannung des Netzes zu sein ist, und
**dadurch gekennzeichnet, dass** das netzverbundene Steuerungsverfahren nach erfolgreicher Verbindung des Energiespeicher-Inverters mit dem Netz ferner die folgenden Schritte aufweist, um die vom Energiespeicher-Inverter getragene Lastblindleistung schrittweise in das Netz zu übertragen:
Erhöhen (S404) der eingestellten Ausgangsspannung des Energiespeicher-Inverters mit einer fünften Schrittweite, nachdem der Energiespeicher-Inverter erfolgreich an das Netz angeschlossen wurde, in einem Fall, dass die eingestellte Ausgangsspannung des Energiespeicher-Inverters mit der voreingestellten ersten Schrittweite verringert wird, bevor der Energiespeicher-Inverter an das Netz angeschlossen wird, bis eine dritte Abweichung zwischen der eingestellten Ausgangsspannung des Energiespeicher-Inverters und der Spannung des Netzes innerhalb eines zweiten eingestellten Spannungsschwellenwerts liegt, und Einstellen der eingestellten Ausgangsspannung des Energiespeicher-Inverters die Spannung des Netzes zu sein; oder
Verringern (S405) der eingestellten Ausgangsspannung des Energiespeicher-Inverters mit einer sechsten Schrittweite, nachdem der Energiespeicher-Inverter erfolgreich an das Netz angeschlossen wurde, in einem Fall, dass die eingestellte Ausgangsspannung des Energiespeicher-Inverters mit der voreingestellten zweiten Schrittweite erhöht wird, bevor der Energiespeicher-Inverter an das Netz angeschlossen wird, bis eine dritte Abweichung zwischen der eingestellten Ausgangsspannung des Energiespeicher-Inverters und der Spannung des Netzes innerhalb eines zweiten eingestellten Spannungsschwellenwerts liegt, und Einstellen der eingestellten Ausgangsspannung des Energiespeicher-Inverters die Spannung des Netzes zu sein.

2. Netzverbundenes Steuerverfahren basierend auf dem virtuellen Synchronisierer nach Anspruch 1, wobei das Einstellen (S202) der eingestellten Ausgangsfrequenz des Energiespeicher-Inverters in einem Fall, in dem erkannt wird, dass die zweite Abweichung den ersten eingestellten Spannungsschwellenwerts überschreitet, aufweist:
Verringern (S302, S402) der eingestellten Ausgangsfrequenz des Energiespeicher-Inverters mit einer voreingestellten dritten Schrittweite, in einem Fall, dass die Ausgangsfrequenz des Energiespeicher-Inverters größer die Frequenz des Netzes zu sein ist; oder
Erhöhen (S302, S402) der eingestellten Ausgangsfrequenz des Energiespeicher-Inverters mit einer voreingestellten vierten Schrittweite, in einem Fall, dass die Ausgangsfrequenz des Energiespeicher-Inverters kleiner die Frequenz des Netzes zu sein ist.

3. Netzverbundenes Steuerverfahren auf der Grundlage des virtuellen Synchronisierers nach Anspruch 1 oder 2, wobei nach erfolgreicher Verbindung des Energiespeicher-Inverters mit dem Netz das netzverbundene Steuerverfahren ferner aufweist:
Erhöhen (S406) der eingestellten Ausgangsfrequenz des Energiespeicher-Inverters mit einer siebten Schrittweite, nachdem der Energiespeicher-Inverter erfolgreich an das Netz angeschlossen wurde, in einem Fall, dass die eingestellte Ausgangsfrequenz des Energiespeicher-Inverters mit der voreingestellten dritten Schrittweite verringert wird, bevor der Energiespeicher-Inverter an das Netz angeschlossen wird, bis eine vierte Abweichung zwischen der eingestellten Ausgangsfrequenz des Energiespeicher-Inverters und der Frequenz des Netzes innerhalb eines zweiten eingestellten Frequenzschwellenwerts liegt, und Einstellen der eingestellten Ausgangsfrequenz des Energiespeicher-Inverters die Frequenz des Netzes zu sein; oder
Verringern (S407) der eingestellten Ausgangsfrequenz des Energiespeicher-Inverters mit einer achten Schrittweite, nachdem der Energiespeicher-Inverter erfolgreich an das Netz angeschlossen wurde, in einem Fall, dass die eingestellte Ausgangsfrequenz des Energiespeicher-Inverters mit der voreingestellten vierten Schrittweite erhöht wird, bevor der Energiespeicher-Inverter an das Netz angeschlossen wird, bis eine vierte Abweichung zwischen der eingestellten Ausgangsfrequenz des Energiespeicher-Inverters und der Frequenz des Netzes innerhalb eines zweiten eingestellten Frequenzschwellenwerts liegt, und Einstellen der eingestellten Ausgangsfrequenz des Energiespeicher-Inverters die Frequenz des Netzes zu sein.

4. Netzverbundene Steuervorrichtung basierend auf einem virtuellen Synchronisierer, wobei die netzverbundene Steuervorrichtung aufweist:
eine erste Abweichungsbestimmungseinheit (501), die ausgebildet ist, um zu bestimmen, ob eine erste Abweichung zwischen einer Ausgangsspannung eines Energiespeicher-Inverters und einer Spannung des Netzes einen ersten eingestellten Spannungsschwellenwert überschreitet;
eine Einstelleinheit (502) für die eingestellte Ausgangsspannung, die ausgebildet ist, um eine eingestellte Ausgangsspannung des Energiespeicher-Inverters in einem Fall einzustellen, in dem die erste Abweichung den ersten eingestellten Spannungsschwellenwert überschreitet, so dass die erste Abweichung innerhalb des ersten eingestellten Spannungsschwellenwerts liegt;
eine zweite Abweichungsbestimmungseinheit (503), die ausgebildet ist, um zu bestimmen, ob eine zweite Abweichung zwischen einer Ausgangsfrequenz des Energiespeicher-Inverters und einer Frequenz eines Netzes einen ersten eingestellten Frequenzschwellenwert überschreitet;
eine Ausgangsfrequenz-Einstelleinheit (504), die ausgebildet ist, um eine eingestellte Ausgangsfrequenz des Energiespeicher-Inverters in einem Fall einzustellen, in dem die zweite Abweichung den ersten eingestellten Frequenzschwellenwert überschreitet, so dass die zweite Abweichung innerhalb des ersten eingestellten Frequenzschwellenwerts liegt; und
eine Steuereinheit (505), die ausgebildet ist, um den Energiespeicher-Inverter zu steuern, um mit dem Netz verbunden zu werden, wenn eine Phase einer Spannung des Netzes mit einer Phase einer Ausgangsspannung des Energiespeicher-Inverters übereinstimmt, in einem Fall, dass die erste Abweichung innerhalb des ersten eingestellten Spannungsschwellenwerts und die zweite Abweichung innerhalb des ersten eingestellten Frequenzschwellenwerts liegt, wobei
die erste Abweichungsbestimmungseinheit (501) aufweist:
eine erste Abweichungsbestimmungsuntereinheit (501a), die ausgebildet ist, um zu bestimmen, ob die Ausgangsspannung des Energiespeicher-Inverters größer die Spannung des Netzes zu sein ist, in einem Fall, dass die erste Abweichung zwischen der Ausgangsspannung des Energiespeicher-Inverters und der Spannung des Netzes den ersten eingestellten Spannungsschwellenwert überschreitet; und
die Einstelleinheit (502) für die eingestellte Ausgangsspannung aufweist:
eine Einstelluntereinheit (502a) zur Verringerung der eingestellten Ausgangsspannung, die dafür ausgebildet ist, die Ausgangsspannung des Energiespeicher-Inverters mit einer voreingestellten ersten Schrittweite zu verringern, in einem Fall, dass die Ausgangsspannung des Energiespeicher-Inverters größer die Spannung des Netzes zu sein ist, und
eine Einstelluntereinheit (502b) zur Erhöhung der eingestellten Ausgangsspannung, die dafür ausgebildet ist, die Ausgangsspannung des Energiespeicher-Inverters mit einer voreingestellten zweiten Schrittweite zu erhöhen, in einem Fall, dass die Ausgangsspannung des Energiespeicher-Inverters kleiner die Spannung des Netzes zu sein ist, und
**dadurch gekennzeichnet, dass** die netzverbundene Steuervorrichtung weiterhin aufweist:
eine Spannungswiederherstellungserhöhungseinheit (701), die ausgebildet ist, um die eingestellte Ausgangsspannung des Energiespeicher-Inverters mit einer fünften Schrittweite zu erhöhen, um die vom Energiespeicher-Inverter getragene Lastblindleistung schrittweise in das Netz zu übertragen, nachdem der Energiespeicher-Inverter erfolgreich an das Netz angeschlossen ist, in einem Fall, dass die eingestellte Ausgangsspannung des Energiespeicher-Inverters mit der voreingestellten ersten Schrittweite verringert wird, bevor der Energiespeicher-Inverter an das Netz angeschlossen wird, bis eine dritte Abweichung zwischen der eingestellten Ausgangsspannung des Energiespeicher-Inverters und der Spannung des Netzes innerhalb eines zweiten voreingestellten Spannungsschwellenwerts liegt, und Einstellen der eingestellten Ausgangsspannung des Energiespeicher-Inverters die Spannung des Netzes zu sein; und
eine Spannungswiederherstellungsverringerungseinheit (702), die ausgebildet ist, um die eingestellte Ausgangsspannung des Energiespeicher-Inverters mit einer sechsten Schrittweite zu verringern, nachdem der Energiespeicher-Inverter erfolgreich mit dem Netz verbunden wurde, in einem Fall, dass die eingestellte Ausgangsspannung des Energiespeicher-Inverters mit der voreingestellten zweiten Schrittweite erhöht wird, bevor der Energiespeicher-Inverter mit dem Netz verbunden wird, bis eine dritte Abweichung zwischen der eingestellten Ausgangsspannung des Energiespeicher-Inverters und der Spannung des Netzes innerhalb eines zweiten eingestellten Spannungsschwellenwerts liegt, und Einstellen der eingestellten Ausgangsspannung des Energiespeicher-Inverters die Spannung des Netzes zu sein.

5. Die netzverbundene Steuervorrichtung nach Anspruch 4, wobei die zweite Abweichungsbestimmungseinheit (503) aufweist:
eine zweite Abweichungsbestimmungsuntereinheit (503a), die ausgebildet ist, um zu bestimmen, ob die Ausgangsfrequenz des Energiespeicher-Inverters größer ist die Frequenz des Netzes zu sein, in einem Fall, dass die zweite Abweichung zwischen der Ausgangsfrequenz des Energiespeicher-Inverters und der Frequenz des Netzes den ersten eingestellten Frequenzschwellenwert überschreitet; und
die eingestellte Ausgangsfrequenz-Einstelleinheit (504) aufweist:
die Einstelluntereinheit (504a) zur Verringerung der eingestellten Ausgangsfrequenz, die dafür ausgebildet ist, die eingestellte Ausgangsfrequenz des Energiespeicher-Inverters mit einer voreingestellten dritten Schrittweite zu verringern, für den Fall, dass die Ausgangsfrequenz des Energiespeicher-Inverters größer die Frequenz des Netzes zu sein ist; und
die Einstelluntereinheit (504b) zur Erhöhung der eingestellten Ausgangsfrequenz, die dafür ausgebildet ist, die eingestellte Ausgangsfrequenz des Energiespeicher-Inverters mit einer voreingestellten vierten Schrittweite zu erhöhen, für den Fall, dass die Ausgangsfrequenz des Energiespeicher-Inverters kleiner die Frequenz des Netzes zu sein ist.

6. Die netzverbundene Steuervorrichtung nach Anspruch 4, ferner umfassend:
eine Frequenzwiederherstellungserhöhungseinheit (703), die ausgebildet ist, um die eingestellte Ausgangsfrequenz des Energiespeicher-Inverters mit einer siebten Schrittweite zu erhöhen, nachdem der Energiespeicher-Inverter erfolgreich mit dem Netz verbunden wurde, in einem Fall, dass die eingestellte Ausgangsfrequenz des Energiespeicher-Inverters mit der voreingestellten dritten Schrittweite verringert wird, bevor der Energiespeicher-Inverter mit dem Netz verbunden wird, bis eine vierte Abweichung zwischen der eingestellten Ausgangsfrequenz des Energiespeicher-Inverters und der Frequenz des Netzes innerhalb eines zweiten eingestellten Frequenzschwellenwerts liegt, und Einstellen der eingestellten Ausgangsfrequenz des Energiespeicher-Inverters die Frequenz des Netzes zu sein; und
eine Frequenzwiederherstellungsverringerungseinheit (704), die ausgebildet ist, um die eingestellte Ausgangsfrequenz des Energiespeicher-Inverters mit einer achten Schrittweite zu verringern, nachdem der Energiespeicher-Inverter erfolgreich mit dem Netz verbunden wurde, in einem Fall, dass die eingestellte Ausgangsfrequenz des Energiespeicher-Inverters mit der voreingestellten vierten Schrittweite erhöht wird, bevor der Energiespeicher-Inverter mit dem Netz verbunden wird, bis eine vierte Abweichung zwischen der eingestellten Ausgangsfrequenz des Energiespeicher-Inverters und der Frequenz des Netzes innerhalb eines zweiten eingestellten Frequenzschwellenwerts liegt, und Einstellen der eingestellten Ausgangsfrequenz des Energiespeicher-Inverters die Frequenz des Netzes zu sein.

## Revendications

1. Procédé de contrôle raccordé au réseau basé sur un synchroniseur virtuel, le procédé de contrôle raccordé au réseau comprenant :
la détection (S201) qu'un premier écart entre une tension de sortie d'un onduleur de stockage d'énergie et une tension d'un réseau dépasse ou non un premier seuil de tension établi, et le réglage (S201) d'une tension de sortie fixe de l'onduleur de stockage d'énergie dans un cas où il est détecté que le premier écart dépasse le premier seuil de tension établi, de telle sorte que le premier écart se situe à l'intérieur du premier seuil de tension établi ;
la détection (S202) qu'un deuxième écart entre une fréquence de sortie de l'onduleur de stockage d'énergie et une fréquence du réseau dépasse ou non un premier seuil de fréquence établi, et le réglage (S202) d'une fréquence de sortie fixe de l'onduleur de stockage d'énergie dans un cas où il est détecté que le deuxième écart dépasse le premier seuil de fréquence établi, de telle sorte que le deuxième écart se situe à l'intérieur du premier seuil de fréquence établi ; et
le contrôle (S203) de l'onduleur de stockage d'énergie pour le raccorder au réseau quand une phase d'une tension du réseau est cohérente avec une phase d'une tension de sortie de l'onduleur de stockage d'énergie dans un cas où le premier écart se situe à l'intérieur du premier seuil de tension établi et le deuxième écart se situe à l'intérieur du premier seuil de fréquence établi,
dans lequel le réglage (S201) de la tension de sortie fixe de l'onduleur de stockage d'énergie dans un cas où il est détecté que le premier écart dépasse le premier seuil de tension établi comprend :
la diminution (S301, S401) de la tension de sortie fixe de l'onduleur de stockage d'énergie avec une première taille de palier préétablie dans un cas où la tension de sortie de l'onduleur de stockage d'énergie est supérieure à la tension du réseau ; ou
l'augmentation (S301, S401) de la tension de sortie fixe de l'onduleur de stockage d'énergie avec une deuxième taille de palier préétablie dans un cas où la tension de sortie de l'onduleur de stockage d'énergie est inférieure à la tension du réseau, et
**caractérisé en ce que**, après que l'onduleur de stockage d'énergie a été raccordé au réseau avec succès, le procédé de contrôle raccordé au réseau comprend en outre les étapes suivantes pour transférer progressivement une puissance réactive des charges portée par l'onduleur de stockage d'énergie au réseau :
augmentation (S404) de la tension de sortie fixe de l'onduleur de stockage d'énergie avec une cinquième taille de palier après que l'onduleur de stockage d'énergie a été raccordé au réseau avec succès dans un cas où la tension de sortie fixe de l'onduleur de stockage d'énergie est diminuée avec la première taille de palier préétablie avant que l'onduleur de stockage d'énergie soit raccordé au réseau, jusqu'à ce qu'un troisième écart entre la tension de sortie fixe de l'onduleur de stockage d'énergie et la tension du réseau se situe à l'intérieur d'un deuxième seuil de tension établi, et le réglage de la tension de sortie fixe de l'onduleur de stockage d'énergie sur la tension du réseau ; ou
la diminution (S405) de la tension de sortie fixe de l'onduleur de stockage d'énergie avec une sixième taille de palier après que l'onduleur de stockage d'énergie a été raccordé au réseau avec succès dans un cas où la tension de sortie fixe de l'onduleur de stockage d'énergie est augmentée avec la deuxième taille de palier préétablie avant que l'onduleur de stockage d'énergie soit raccordé au réseau, jusqu'à ce qu'un troisième écart entre la tension de sortie fixe de l'onduleur de stockage d'énergie et la tension du réseau se situe à l'intérieur d'un deuxième seuil de tension établi, et le réglage de la tension de sortie fixe de l'onduleur de stockage d'énergie sur la tension du réseau.

2. Procédé de contrôle raccordé au réseau basé sur un synchroniseur virtuel selon la revendication 1, dans lequel le réglage (S202) de la fréquence de sortie fixe de l'onduleur de stockage d'énergie dans un cas où il est détecté que le deuxième écart dépasse le premier seuil de fréquence établi comprend :
la diminution (S302, S402) de la fréquence de sortie fixe de l'onduleur de stockage d'énergie avec une troisième taille de palier préétablie dans un cas où la fréquence de sortie de l'onduleur de stockage d'énergie est supérieure à la fréquence du réseau ; ou
l'augmentation (S302, S402) de la fréquence de sortie fixe de l'onduleur de stockage d'énergie avec une quatrième taille de palier préétablie dans un cas où la fréquence de sortie de l'onduleur de stockage d'énergie est inférieure à la fréquence du réseau.

3. Procédé de contrôle raccordé au réseau basé sur un synchroniseur virtuel selon la revendication 1 ou 2, le procédé de contrôle raccordé au réseau comprenant en outre, après que l'onduleur de stockage d'énergie a été raccordé au réseau avec succès :
l'augmentation (S406) de la fréquence de sortie fixe de l'onduleur de stockage d'énergie avec une septième taille de palier après que l'onduleur de stockage d'énergie a été raccordé au réseau avec succès dans un cas où la fréquence de sortie fixe de l'onduleur de stockage d'énergie est diminuée avec la troisième taille de palier préétablie avant que l'onduleur de stockage d'énergie soit raccordé au réseau, jusqu'à ce qu'un quatrième écart entre la fréquence de sortie fixe de l'onduleur de stockage d'énergie et la fréquence du réseau se situe à l'intérieur d'un deuxième seuil de fréquence établi, et le réglage de la fréquence de sortie fixe de l'onduleur de stockage d'énergie sur la fréquence du réseau ; ou
la diminution (S407) de la fréquence de sortie fixe de l'onduleur de stockage d'énergie avec une huitième taille de palier après que l'onduleur de stockage d'énergie a été raccordé au réseau avec succès dans un cas où la fréquence de sortie fixe de l'onduleur de stockage d'énergie est augmentée avec la quatrième taille de palier préétablie avant que l'onduleur de stockage d'énergie soit raccordé au réseau, jusqu'à ce qu'un quatrième écart entre la fréquence de sortie fixe de l'onduleur de stockage d'énergie et la fréquence du réseau se situe à l'intérieur d'un deuxième seuil de fréquence établi, et le réglage de la fréquence de sortie fixe de l'onduleur de stockage d'énergie sur la fréquence du réseau.

4. Dispositif de contrôle raccordé au réseau basé sur un synchroniseur virtuel, le dispositif de contrôle raccordé au réseau comprenant :
une première unité de détermination d'écart (501) configurée pour détecter si un premier écart entre une tension de sortie d'un onduleur de stockage d'énergie et une tension d'un réseau dépasse un premier seuil de tension établi ;
une unité de réglage de tension de sortie fixe (502) configurée pour régler une tension de sortie fixe de l'onduleur de stockage d'énergie dans un cas où le premier écart dépasse le premier seuil de tension établi, de telle sorte que le premier écart se situe à l'intérieur du premier seuil de tension établi ;
une deuxième unité de détermination d'écart (503) configurée pour déterminer si un deuxième écart entre une fréquence de sortie de l'onduleur de stockage d'énergie et une fréquence d'un réseau dépasse un premier seuil de fréquence établi ;
une unité de réglage de fréquence de sortie fixe (504) configurée pour régler une fréquence de sortie fixe de l'onduleur de stockage d'énergie dans un cas où le deuxième écart dépasse le premier seuil de fréquence établi, de telle sorte que le deuxième écart se situe à l'intérieur du premier seuil de fréquence établi ; et
une unité de contrôle (505) configurée pour contrôler l'onduleur de stockage d'énergie pour le raccorder au réseau quand une phase d'une tension du réseau est cohérente avec une phase d'une tension de sortie de l'onduleur de stockage d'énergie dans un cas où le premier écart se situe à l'intérieur du premier seuil de tension établi et le deuxième écart se situe à l'intérieur du premier seuil de fréquence établi, dans lequel
la première unité de détermination d'écart (501) comprend :
une première sous-unité de détermination d'écart (501a) configurée pour déterminer si la tension de sortie de l'onduleur de stockage d'énergie est supérieure à la tension du réseau dans un cas où le premier écart entre la tension de sortie de l'onduleur de stockage d'énergie et la tension du réseau dépasse le premier seuil de tension établi ; et
l'unité de réglage de tension de sortie fixe (502) comprend :
une sous-unité de réglage de diminution de tension de sortie fixe (502a) configurée pour diminuer la tension de sortie fixe de l'onduleur de stockage d'énergie avec une première taille de palier préétablie dans un cas où la tension de sortie de l'onduleur de stockage d'énergie est supérieure à la tension du réseau, et
une sous-unité de réglage d'augmentation de tension de sortie fixe (502b) configurée pour augmenter la tension de sortie fixe de l'onduleur de stockage d'énergie avec une deuxième taille de palier préétablie dans un cas où la tension de sortie de l'onduleur de stockage d'énergie est inférieure à la tension du réseau, et **caractérisé en ce que**
le dispositif de contrôle raccordé au réseau comprend en outre :
une unité d'augmentation de récupération de tension (701) configurée pour augmenter la tension de sortie fixe de l'onduleur de stockage d'énergie avec une cinquième taille de palier pour transférer progressivement une puissance réactive des charges portée par l'onduleur de stockage d'énergie au réseau après que l'onduleur de stockage d'énergie a été raccordé au réseau avec succès dans un cas où la tension de sortie fixe de l'onduleur de stockage d'énergie est diminuée avec la première taille de palier préétablie avant que l'onduleur de stockage d'énergie soit raccordé au réseau, jusqu'à ce qu'un troisième écart entre la tension de sortie fixe de l'onduleur de stockage d'énergie et la tension du réseau se situe à l'intérieur d'un deuxième seuil de tension établi, et régler la tension de sortie fixe de l'onduleur de stockage d'énergie sur la tension du réseau ; et
une unité de diminution de récupération de tension (702) configurée pour diminuer la tension de sortie fixe de l'onduleur de stockage d'énergie avec une sixième taille de palier après que l'onduleur de stockage d'énergie a été raccordé au réseau avec succès dans un cas où la tension de sortie fixe de l'onduleur de stockage d'énergie est augmentée avec la deuxième taille de palier préétablie avant que l'onduleur de stockage d'énergie soit raccordé au réseau, jusqu'à ce qu'un troisième écart entre la tension de sortie fixe de l'onduleur de stockage d'énergie et la tension du réseau se situe à l'intérieur d'un deuxième seuil de tension établi, et régler la tension de sortie fixe de l'onduleur de stockage d'énergie sur la tension du réseau.

5. Dispositif de contrôle raccordé au réseau selon la revendication 4, dans lequel
la deuxième unité de détermination d'écart (503) comprend :
une deuxième sous-unité de détermination d'écart (503a) configurée pour déterminer si la fréquence de sortie de l'onduleur de stockage d'énergie est supérieure à la fréquence du réseau dans un cas où le deuxième écart entre la fréquence de sortie de l'onduleur de stockage d'énergie et la fréquence du réseau dépasse le premier seuil de fréquence établi ; et
l'unité de réglage de fréquence de sortie fixe (504) comprend :
la sous-unité de réglage de diminution de fréquence de sortie fixe (504a) configurée pour diminuer la fréquence de sortie fixe de l'onduleur de stockage d'énergie avec une troisième taille de palier préétablie dans un cas où la fréquence de sortie de l'onduleur de stockage d'énergie est supérieure à la fréquence du réseau ; et
la sous-unité de réglage d'augmentation de fréquence de sortie fixe (504b) configurée pour augmenter la fréquence de sortie fixe de l'onduleur de stockage d'énergie avec une quatrième taille de palier préétablie dans un cas où la fréquence de sortie de l'onduleur de stockage d'énergie est inférieure à la fréquence du réseau.

6. Dispositif de contrôle raccordé au réseau selon la revendication 4, comprenant en outre :
une unité d'augmentation de récupération de fréquence (703) configurée pour augmenter la fréquence de sortie fixe de l'onduleur de stockage d'énergie avec une septième taille de palier après que l'onduleur de stockage d'énergie a été raccordé au réseau avec succès dans un cas où la fréquence de sortie fixe de l'onduleur de stockage d'énergie est diminuée avec la troisième taille de palier préétablie avant que l'onduleur de stockage d'énergie soit raccordé au réseau, jusqu'à ce qu'un quatrième écart entre la fréquence de sortie fixe de l'onduleur de stockage d'énergie et la fréquence du réseau se situe à l'intérieur d'un deuxième seuil de fréquence établi, et régler la fréquence de sortie fixe de l'onduleur de stockage d'énergie sur la fréquence du réseau ; et
une unité de diminution de récupération de fréquence (704) configurée pour diminuer la fréquence de sortie fixe de l'onduleur de stockage d'énergie avec une huitième taille de palier après que l'onduleur de stockage d'énergie a été raccordé au réseau avec succès dans un cas où la fréquence de sortie fixe de l'onduleur de stockage d'énergie est augmentée avec la quatrième taille de palier préétablie avant que l'onduleur de stockage d'énergie soit raccordé au réseau, jusqu'à ce qu'un quatrième écart entre la fréquence de sortie fixe de l'onduleur de stockage d'énergie et la fréquence du réseau se situe à l'intérieur d'un deuxième seuil de fréquence établi, et régler la fréquence de sortie fixe de l'onduleur de stockage d'énergie sur la fréquence du réseau.
